# DEMANDE DE BREVET EUROPEEN

(11) **EP 4 814 278 A1**
(43) Date de publication de la demande: **30.09.2026**
(21) Numéro de dépôt: 26166498.1
(22) Date de dépôt: 20.03.2026
(51) Int. Cl.: F02C 3/22, F02C 7/224, F02K 1/82

(54) **SYSTÈME DE PROPULSION POUR AÉRONEF**

(30) Priorité: 24.03.2025 FR 2502975
(71) Demandeur: Airbus Operations S.A.S., 31060 Toulouse (FR)
(72) Inventeur: RAVENEAU, Guillaume, 31060 TOULOUSE (FR)
(74) Mandataire: Cabinet Le Guen Maillet

(57) **Abrégé**

Système (2) de propulsion pour aéronef (1) comportant notamment une tuyère d'échappement (24) par laquelle s'échappe un flux (Fx) de gaz d'échappement chaud et un échangeur thermique (3) disposé dans la tuyère d'échappement et configuré pour réchauffer du dihydrogène destiné à alimenter une chambre de combustion.

L'échangeur thermique comporte une paroi intérieure (31) qui forme un conduit (310) à l'intérieur duquel s'écoule le flux (Fx) et une paroi extérieure (32) qui s'étend autour de la paroi intérieure et qui forme avec cette dernière un espace d'écoulement (33) du carburant. En particulier, les axes longitudinaux des parois intérieure et extérieure s'étendent globalement parallèlement à l'axe longitudinal (241) de la tuyère d'échappement (24).

Les échanges thermiques entre le flux de gaz d'échappement chaud et le carburant circulant dans l'échangeur thermique s'effectuent donc sans croisement des flux, ce qui permet de limiter les risques d'endommagement de l'échangeur thermique et d'améliorer la sécurité globale du système de propulsion.

## Description

### DOMAINE TECHNIQUE

La présente invention concerne un système de propulsion comportant un moteur à combustion alimenté en dihydrogène. L'invention concerne également un aéronef comportant un tel système de propulsion.

### ÉTAT DE LA TECHNIQUE ANTÉRIEURE

Afin de réduire la pollution engendrée par l'utilisation de kérosène lors de l'utilisation d'un aéronef, il se développe des aéronefs dont les moteurs sont alimentés en dihydrogène. Plus particulièrement, le dihydrogène est utilisé pour alimenter une chambre de combustion dans laquelle le dihydrogène est brûlé de sorte à générer une énergie motrice et faire tourner le moteur à combustion interne de l'aéronef pour générer la poussée de l'aéronef. Généralement, du dihydrogène liquide est stocké dans un réservoir cryogénique avant d'être transporté puis injecté dans son état gazeux dans la chambre de combustion du moteur.

Il est connu que le rendement de la combustion d'un carburant, et notamment du dihydrogène, est amélioré si ce carburant est chauffé avant ladite combustion. Il est également connu d'utiliser une partie des gaz de combustion chauds évacués par une tuyère d'éjection, assurant l'éjection des gaz de combustion, pour réchauffer le carburant.

Il existe un besoin de fournir une nouvelle solution permettant d'optimiser les échanges thermiques au sein de l'échappement du moteur pour réchauffer le dihydrogène.

### EXPOSÉ DE L'INVENTION

Un objet de la présente invention est de proposer un système de propulsion à dihydrogène dont la sécurité est améliorée.

À cet effet, est proposé un système de propulsion pour aéronef comportant :
- une chambre de combustion,
- un dispositif d'injection de carburant configuré pour injecter un carburant dans ladite chambre de combustion, où ledit carburant est du dihydrogène,
- une turbine configurée pour être entraînée en rotation par l'énergie motrice produite par ladite chambre de combustion,
- une tuyère d'échappement, disposée à l'arrière de ladite turbine, présentant un axe longitudinal et dans laquelle circule un flux de gaz d'échappement chaud issu de la combustion dudit carburant dans ladite chambre de combustion à évacuer, où ledit flux de gaz d'échappement s'écoule selon une direction et où ladite direction s'étend globalement parallèlement audit axe longitudinal de ladite tuyère d'échappement ;
- un échangeur thermique disposé dans ladite tuyère d'échappement et dans lequel circule ledit carburant avant d'alimenter ledit dispositif d'injection et où ledit échangeur thermique est traversé par ledit flux de gaz d'échappement.

Selon l'invention, ledit échangeur thermique comporte :
- une paroi intérieure globalement tubulaire et qui forme un conduit à l'intérieur duquel s'écoule ledit flux de gaz d'échappement ;
- une paroi extérieure globalement tubulaire qui s'étend autour de ladite paroi intérieure et qui forme avec ladite paroi intérieure un espace d'écoulement dans lequel s'écoule ledit carburant.

En particulier, les axes longitudinaux, respectivement desdites parois intérieure et extérieure, s'étendent globalement parallèlement audit axe longitudinal de ladite tuyère d'échappement. Le flux Fx de gaz d'échappement chaud traverse donc longitudinalement l'échangeur thermique, au sein du conduit, sans qu'il ne soit sensiblement freiné par l'échangeur thermique 3. De cette manière, les échanges thermiques entre le flux de gaz d'échappement chaud et le carburant circulant dans l'échangeur thermique s'effectuent sans croisement des flux, ce qui permet de limiter les risques d'endommagement de l'échangeur thermique et ainsi d'améliorer la sécurité globale du système de propulsion.

En outre, cette mise en œuvre permet de récolter l'énergie soi-disant perdue du système de propulsion pour conditionner le carburant (ici du dihydrogène) à une température optimale permettant sa combustion dans la chambre de combustion. De cette manière, le cycle du système de propulsion est optimisé tout en réduisant le coût de réchauffement du carburant durant la combustion.

Avantageusement, ladite paroi intérieure est une paroi au moins partiellement ondulée.

Selon un aspect particulier de l'invention, ladite paroi intérieure comporte une pluralité de premières ailettes orientées vers l'axe longitudinal de ladite paroi intérieure.

Selon un autre aspect particulier de l'invention, ladite paroi extérieure présente une résistance à la pression supérieure ou égale à 50 bars.

Selon encore un autre aspect particulier de l'invention, ledit échangeur thermique comporte une pluralité de parois intermédiaires qui s'étendent entre ladite paroi intérieure et ladite paroi extérieure, où lesdites parois intermédiaires forment une pluralité de couches radiales au sein dudit espace d'écoulement qui sont en communication fluidique les unes avec les autres, et où ledit carburant circule dans lesdites couches depuis une couche extérieure vers une couche intérieure.

Selon un aspect particulier de l'invention, ledit espace d'écoulement comporte une pluralité de deuxièmes ailettes reliant chacune au moins deux couches.

Selon un autre aspect particulier de l'invention, lesdites deuxièmes ailettes comportent des trous ou des plots.

Selon un aspect particulier de l'invention, ledit espace d'écoulement comporte une couche de protection contenant un fluide sous pression ayant une capacité à inerter du dihydrogène. Selon un autre aspect particulier de l'invention, ladite couche de protection est disposée entre ladite paroi intérieure et ladite couche intérieure.

L'invention concerne également un aéronef comportant au moins un système de propulsion tel que décrit précédemment.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation et de ses variantes, ladite description étant faite en relation avec les dessins joints, parmi lesquels :
[Fig. 1] est une vue de dessus d'un aéronef selon l'invention ;
[Fig. 2] est une vue de côté et en coupe d'un exemple de réalisation d'un système de propulsion selon l'invention ;
[Fig. 3] est une vue de derrière et en coupe d'un échangeur thermique mis en œuvre dans le système de propulsion de la Fig. 2 ;
[Fig. 4] est une vue schématique, de derrière et en coupe, de l'échangeur thermique de la Fig. 3 ;
[Fig. 5] est une vue schématique, de côté et en coupe, de l'échangeur thermique de la Fig. 3 ; et
[Fig. 6] est une vue schématique, de derrière et en coupe, d'une variante de l'échangeur thermique de la Fig. 3.

### EXPOSÉ DÉTAILLÉ D'UN EXEMPLE DE RÉALISATION

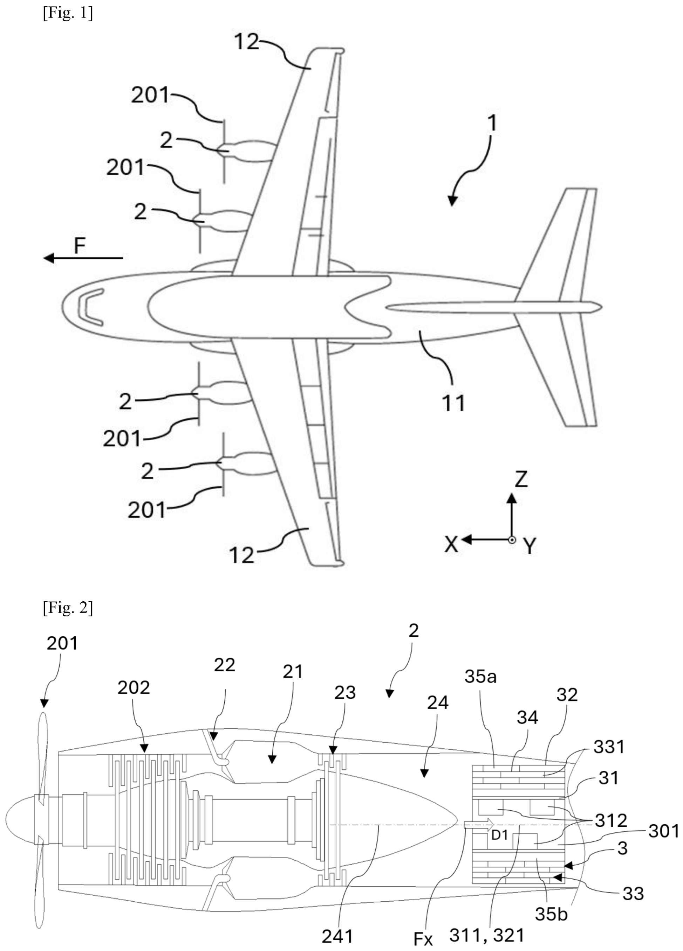

La Fig. 1 montre un aéronef 1 qui présente un fuselage 11 de part et d'autre duquel est fixée une aile 12. Sous chaque aile 12 est fixé au moins un système de propulsion 2 selon l'invention.

Par convention, on appelle X la direction longitudinale de l'aéronef 1, Y la direction transversale de l'aéronef 1 qui est horizontale lorsque l'aéronef 1 est au sol, et Z la direction verticale ou hauteur verticale lorsque l'aéronef 1 est au sol, ces trois directions X, Y et Z étant orthogonales entre elles.

D'autre part, les termes " avant " et " arrière " sont à considérer par rapport à une direction d'avancement de l'aéronef 1 lors du fonctionnement des systèmes de propulsion 2, cette direction étant représentée schématiquement par la flèche F.

Dans le mode de réalisation de l'invention présenté ici, le système de propulsion 2 prend la forme d'un moteur à combustion interne comportant une hélice 201 montée sur l'arbre moteur du moteur à combustion interne qui utilise du dihydrogène comme carburant. Le système de propulsion comporte également un compresseur 202 qui est situé à l'arrière (c'est-à-dire en aval) de l'hélice 201.

On comprend bien évidemment que le système 2 de propulsion de l'invention pourrait être mis en œuvre avec un turboréacteur.

Le système 2 de propulsion, illustré sur la Fig. 2, comporte en outre une chambre de combustion 21 ainsi qu'un dispositif d'injection 22 de carburant configuré pour injecter du carburant dans la chambre de combustion 21. En particulier, le carburant utilisé est du dihydrogène qui est injecté dans la chambre de combustion sous forme gazeuse.

Le système 2 de propulsion comporte également une turbine 23, disposée à l'arrière (c'est-à-dire en aval) de la chambre de combustion 21, configurée pour être entraînée en rotation par l'énergie motrice produite dans la chambre de combustion 21 lors de la combustion du dihydrogène. La turbine 23 est suivie d'une tuyère d'échappement 24 (qui est donc disposée à l'arrière de la turbine 23) dans laquelle circule un flux Fx de gaz d'échappement chaud issu de la combustion du dihydrogène dans la chambre de combustion 21. Ce flux Fx de gaz d'échappement chaud est destiné à être évacué du système 2 de propulsion par la tuyère d'échappement 24.

La tuyère d'échappement 24 présente dans cet exemple une forme globalement tubulaire, ou conique, et s'étend selon un axe longitudinal 241 globalement parallèle à l'axe horizontal X. Le flux Fx de gaz d'échappement chaud s'écoule selon une direction D1 (visible sur la Fig. 2) qui est globalement parallèle à l'axe longitudinal 241 de la tuyère d'échappement 24.

Comme indiqué précédemment, et afin de réchauffer le dihydrogène avant qu'il ne soit injecté dans la chambre de combustion 21, le système 2 de propulsion comporte un échangeur thermique 3 disposé dans la tuyère d'échappement 24, à l'arrière de la turbine 23. Le dihydrogène circule dans l'échangeur thermique 3 avant d'alimenter le dispositif d'injection 22 de sorte à être réchauffé. En effet, l'échangeur thermique 3 étant traversé par le flux Fx de gaz d'échappement chaud issu de la chambre de combustion 21, le dihydrogène qui est généralement stocké dans un réservoir cryogénisé (sous forme liquide) est alors réchauffé par le flux Fx de sorte à être injecté à une température optimale (sous forme gazeuse) dans la chambre de combustion 21.

Selon l'invention, l'échangeur thermique 3 comporte une paroi intérieure 31 globalement tubulaire qui forme un conduit 301 à l'intérieur duquel s'écoule le flux Fx de gaz d'échappement chaud. L'échangeur thermique 3 comporte également une paroi extérieure 32 globalement tubulaire qui s'étend autour de la paroi intérieure 31 et qui forme avec la paroi intérieure 31 un espace d'écoulement 33 dans lequel s'écoule le carburant de sorte à être réchauffé. L'échangeur thermique a ainsi une forme générale cylindrique, à base d'une couronne sensiblement circulaire, délimitée par les parois intérieure 31 et extérieure 32.

En particulier, les axes longitudinaux 311, 321, respectivement des parois intérieure 31 et extérieure 32, s'étendent globalement parallèlement à l'axe longitudinal 241 de la tuyère d'échappement 24 (et donc parallèlement à la direction D1 du flux Fx).

Le flux Fx de gaz d'échappement chaud issu de la chambre de combustion 21 traverse longitudinalement l'échangeur thermique 3, au sein du conduit 301, sans qu'il ne soit sensiblement freiné dans la tuyère d'échappement 24 par l'échangeur thermique 3. De cette manière, le flux Fx de gaz d'échappement chaud est évacué efficacement. Malgré cela, l'échangeur thermique 3 peut efficacement réchauffer le carburant circulant dans ce dernier car le flux Fx de gaz d'échappement chaud s'écoulant dans le conduit 301 chauffe par convection la paroi intérieure 31 et ainsi le carburant se trouvant dans l'espace d'écoulement 33 de l'échangeur thermique 3. De cette manière, les échanges thermiques entre le flux Fx de gaz d'échappement chaud et le carburant circulant dans l'échangeur thermique 3 s'effectuent sans croisement des flux, ce qui permet de limiter les risques d'endommagement de l'échangeur thermique 3 et ainsi d'améliorer la sécurité globale du système 2 de propulsion. Cette mise en œuvre permet donc de récolter l'énergie soi-disant perdue du système de propulsion 2 pour conditionner le carburant (ici du dihydrogène) à une température optimale permettant sa combustion dans la chambre de combustion. De cette manière, le cycle du système de propulsion est optimisé tout en réduisant le coût de réchauffement du carburant durant la combustion.

Dans l'exemple illustré, la paroi intérieure 31 et la paroi extérieure 32 présentent une section circulaire. Les parois intérieure 31 et extérieure 32 s'étendent ici globalement coaxialement. Dans cet exemple, les parois 31 et 32 s'étendent en outre coaxialement à l'axe longitudinal 241 de la tuyère d'échappement 24. Ainsi, les axes longitudinaux 311 et 321 des parois intérieure 31 et extérieure 32 et l'axe longitudinal 241 de la tuyère d'échappement 24 sont donc ici confondus.

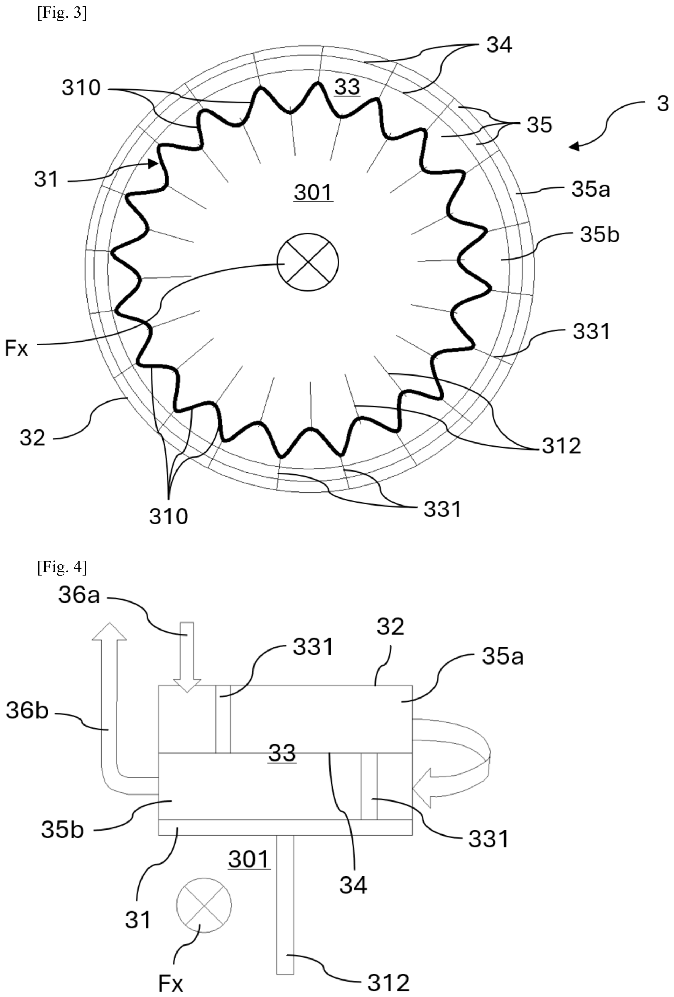

Comme illustré sur la Fig. 3, la paroi intérieure 31 est une paroi au moins partiellement ondulée. Dans cet exemple, la paroi intérieure 31 présente des ondulations 310 sur l'ensemble de sa section/périphérie. De cette manière, la surface d'échange thermique entre le flux Fx de gaz d'échappement chaud et l'échangeur thermique 3 est optimisée. Autrement dit, la paroi intérieure 31 présente une pluralité de bosses, ou une pluralité de creux, ou une alternance de creux et de bosses sur au moins une partie de sa circonférence, de manière à augmenter la surface de la paroi intérieure 31, et de ce fait augmenter la surface d'échange thermique entre le flux Fx de gaz d'échappement chaud qui passe au centre de la paroi intérieure 31 et le carburant qui circule autour de la paroi intérieure 31.

De préférence, la paroi intérieure 31 est renforcée de sorte à protéger l'échangeur thermique 3 des éventuels objets étrangers tels que des débris issus de la turbine en cas de dégradation de cette dernière. Par exemple, la paroi intérieure 31 peut être pourvue de renforts ou présenter une surépaisseur sur les zones de la paroi intérieure 31 se trouvant sur le chemin de potentiels débris issus de la turbine. La paroi intérieure 31 agit donc comme une barrière qui permet donc de séparer le flux Fx de gaz d'échappement s'écoulant dans le conduit 301 du carburant circulant dans l'échangeur thermique 3. La sécurité du système 2 de propulsion est ainsi optimisée.

Comme illustré sur les Figs. 2 à 6, la paroi intérieure 31 comporte une pluralité de premières ailettes 312 qui s'étendent depuis la paroi intérieure 31 en direction de l'axe longitudinal 311 de la paroi intérieure 31. En d'autres termes, les premières ailettes 312 sont orientées vers l'intérieur du conduit 301, et s'étendent dans le flux Fx de gaz d'échappement chaud. Les premières ailettes 312 font donc saillie à partir de la paroi intérieure 31 dans le conduit 301 de sorte à s'étendre dans le passage du flux Fx de gaz d'échappement chaud et maximiser la surface d'échange thermique entre l'échangeur thermique 3 et le flux Fx de gaz d'échappement chaud s'écoulant dans le conduit 301.

Le nombre, les dimensions ainsi que l'orientation des premières ailettes 312 peuvent être sélectionnés de sorte à maximiser la surface d'échange thermique sans pour autant freiner le flux Fx de gaz d'échappement chaud à travers l'échangeur thermique 3. Par exemple, la paroi intérieure 31 peut être équipée d'au moins dix premières ailettes 312, par exemple d'une vingtaine de premières ailettes 312, qui sont régulièrement espacées sur la paroi intérieure 31. Par exemple, les premières ailettes 312 sont espacées radialement d'au moins 15° et d'au plus 40°, par exemple d'environ 18°, sur la paroi intérieure 31. Par exemple, les premières ailettes présentent une hauteur (dimension selon la direction radiale à l'axe longitudinal 311) comprise entre 10 % et 30 % du rayon intérieur du conduit 301, par exemple aux alentours de 20 % de la distance radiale entre la paroi intérieure 31 et l'axe longitudinal 311. Ceci permet avantageusement de perturber moins de 40% de la surface d'écoulement du flux Fx de gaz d'échappement chaud. Par exemple, les premières ailettes 312 présentent une longueur (dimension selon la direction de l'axe longitudinal 311) qui peut être égale à la longueur de l'échangeur thermique 3. Les premières ailettes 312 peuvent présenter une longueur qui peut être égale à leur hauteur. Les premières ailettes 312 peuvent être disposées en quinconce sur la paroi intérieure 31, et par exemple les premières ailettes 312 peuvent être disposées sur plusieurs rangées le long de l'axe longitudinal 311, chaque rangée étant en quinconce par rapport à la rangée précédente. Les rangées de premières ailettes 312 ou les premières ailettes 312 d'une même rangée peuvent être séparées d'une distance sensiblement égale à la hauteur ou à la longueur d'une première ailette 312.

De plus, et comme illustré sur la Fig. 3, l'échangeur thermique 3 comporte une pluralité de parois intermédiaires 34 qui s'étendent entre la paroi intérieure 31 et la paroi extérieure 32. Les parois intermédiaires 3 présentent dans cet exemple une forme tubulaire correspondante aux parois intérieure 31 et extérieure 35 et s'étendent globalement coaxialement aux parois intérieure 31 et extérieure 35.

Les parois intermédiaires 34 forment donc une pluralité de couches 35 radiales au sein de l'espace d'écoulement 33 et qui sont en communication fluidique les unes avec les autres. En particulier, le carburant circule dans les couches 35 depuis une couche extérieure 35a (située la plus proche de la paroi extérieure 32) vers une couche intérieure 35b (située la plus proche de la paroi intérieure 31).

La pluralité de couches 35 permet de réduire les contraintes thermiques sur le matériau (par exemple du métal) utilisé pour fabriquer les parois intermédiaires 34. Cette pluralité de couches 35 permet également d'augmenter les transferts thermiques au sein de l'échangeur thermique 3 afin d'optimiser l'encombrement. En effet, le carburant circule dans l'échangeur thermique 3 depuis la couche extérieure 35a, qui est la couche la plus froide puisque le carburant est de préférence stocké dans un réservoir réfrigéré, vers la couche intérieure 35b, qui est la plus chaude car la plus proche du flux Fx de gaz d'échappement chaud qui présente une température largement plus élevée que le carburant en entrée de l'échangeur thermique 3. Comme illustré sur les Figs. 4 à 6, l'échangeur thermique 3 comporte un orifice d'entrée 36a par lequel le carburant à réchauffer entre dans l'échangeur thermique 3 au niveau de la couche extérieure 35a et un orifice de sortie 36b par lequel le carburant réchauffé sort de l'échangeur thermique 3 au niveau de la couche intérieure 35b pour être injecté ensuite dans la chambre de combustion à la température optimale.

Bien que cela n'apparaisse pas sur les Figs. 4 à 6 qui sont des représentations schématiques de l'échangeur thermique 3 selon l'invention, on comprend bien évidemment que des parois intermédiaires 34 formant des couches 35 tel que décrit précédemment peuvent être mises en œuvre.

De préférence encore, l'espace d'écoulement 33 comporte une pluralité de deuxièmes ailettes 331 qui relient chacune au moins deux couches 35 radiales. Les deuxièmes ailettes 331 permettent de créer des ponts thermiques entre les couches 35 de sorte à apporter de l'énergie thermique, par conduction, à toutes les couches 35 de l'échangeur thermique 3, depuis la couche intérieure 35b jusqu'à la couche extérieure 35a.

De préférence, les deuxièmes ailettes 331 sont fabriquées dans un matériau présentant une haute conductivité thermique (c'est-à-dire supérieure à 10W/m/K, et de préférence supérieure à 100W/m/K). De préférence, les deuxièmes ailettes 331 sont fabriquées en métal ou en alliage métallique, par exemple en aluminium ou en acier. De cette manière, le carburant est réchauffé durant l'ensemble de son écoulement à travers les couches 35 de l'échangeur thermique 3. Les deuxièmes ailettes 331 permettent en outre d'améliorer la structure mécanique de l'échangeur thermique 3 puisqu'elles font le lien entre les parois intermédiaires 34.

Afin d'optimiser la surface d'échange thermique des deuxièmes ailettes 331, ces dernières peuvent comporter des trous ou des plots (non illustrés).

De préférence, la paroi extérieure 32 présente une résistance à la pression supérieure ou égale à 50 bars. Le dihydrogène présent dans l'échangeur thermique 3 étant à une pression pouvant aller jusqu'à 50 bars, la paroi extérieure 32 est conçue pour contenir ce dihydrogène dans ledit échangeur thermique 3.

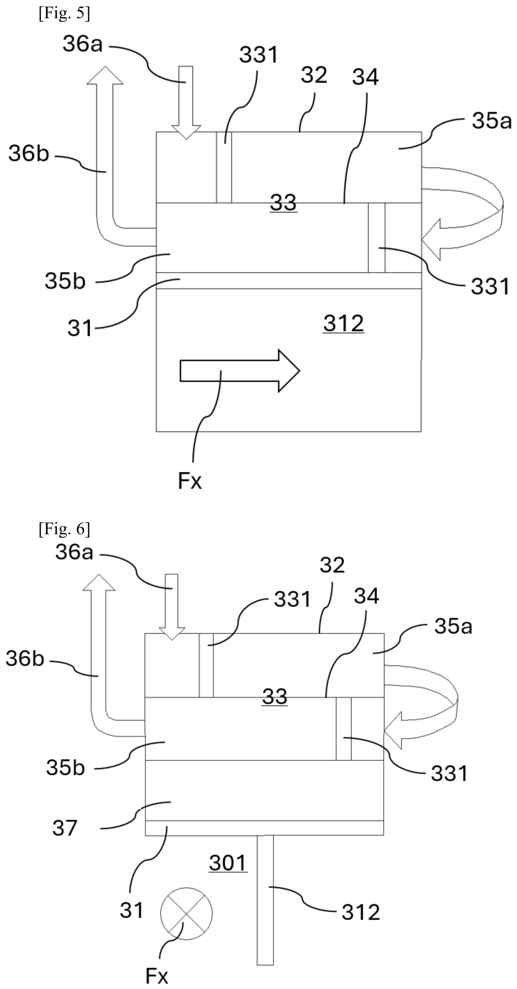

Comme illustré sur la Fig. 6, qui est une variante de réalisation de l'invention, et lorsque le carburant utilisé est du dihydrogène, l'espace d'écoulement 33 peut comporter une couche de protection 37 contenant un fluide sous pression ayant une capacité à inerter du dihydrogène. De préférence, la couche de protection 37 est disposée entre la paroi intérieure 31 et la couche intérieure 35a.

La couche de protection 37 est configurée pour permettre les échanges thermiques entre le flux Fx de gaz d'échappement chaud et la couche intérieure 35b de l'espace d'écoulement 33. De cette manière, la couche de protection 37 fournit une protection additionnelle de l'échangeur thermique contre les objets étrangers (tels que des débris issus de la turbine en cas de dégradation de cette dernière) qui pourraient causer des dommages sur l'échangeur thermique 3. Plus précisément, la couche de protection 37 constitue une barrière physique qui peut permettre de stopper les objets étrangers avant qu'ils n'atteignent les autres couches 35 de l'échangeur thermique 3 et n'endommagent ces dernières. De plus, la couche de protection 37 constitue aussi une barrière chimique qui permet, dans les cas où les objets étrangers atteindraient l'échangeur thermique 3 et causeraient des dommages sur ce dernier, d'inerter le dihydrogène qui pourrait fuir de l'échangeur thermique 3 en cas d'endommagement de ce dernier de sorte à éviter de créer des conditions inflammables, et ainsi éviter tout risque d'incendie ou d'explosion du dihydrogène.

En effet, si des objets étrangers atteignent les couches 35 de l'échangeur thermique 3, cela signifie qu'ils ont traversé et donc endommagé la couche de protection 37, libérant ainsi le fluide sous pression ayant une capacité à inerter du dihydrogène qui y est contenu dans la tuyère d'échappement 24. En particulier, le fluide sous pression ayant une capacité à inerter du dihydrogène est libéré au niveau et autour de l'échangeur thermique 3 à partir duquel une fuite de dihydrogène est susceptible de se produire.

Une telle mise en œuvre permet donc, le temps de détecter une fuite de dihydrogène ou une défaillance du moteur, de couper l'alimentation en carburant de ce dernier et d'éviter tout risque d'incendie ou d'explosion du dihydrogène.

La couche de protection 37 peut être mise à une pression intermédiaire entre la pression de l'air extérieur (entre 0 et 1 bar) et la pression du dihydrogène dans l'échangeur thermique 3 (environ 50 bars). Le fluide sous pression est ainsi à une pression comprise entre 1 bar et 50 bars. La détection d'une fuite est relativement simple puisque dans le cas où la pression augmente au sein de la couche de protection 37, cela signifie qu'une fuite de carburant entre l'espace d'écoulement 33 et la couche de protection 37 est en cours, tandis que si la pression diminue au sein de la couche de protection 37, cela signifie qu'une fuite de fluide sous pression ayant une capacité à inerter du dihydrogène entre la couche de protection 37 et le conduit 301 est en cours.

Selon un autre cas, la pression du fluide sous pression ayant une capacité à inerter du dihydrogène peut être plus élevée (par exemple supérieure à 50 bars) que celle du flux Fx et que celle du carburant circulant dans l'échangeur thermique 3 de sorte à permettre une détection uniquement basée sur la diminution de la pression. Si la pression du fluide sous pression diminue, cela signifie soit qu'il y a une fuite de fluide sous pression de la couche de protection 37 en direction du flux Fx, soit qu'il y a une fuite de fluide sous pression de la couche de protection 37 en direction de l'échangeur thermique 3. Dans tous les cas, il n'y a pas de fuite de dihydrogène possible en direction de la couche de protection 37.

En cas de fuite et en fonction du type de fuite, il est envisageable de fournir un débit d'urgence de fluide sous pression ayant une capacité à inerter du dihydrogène dans l'échangeur thermique 3 de sorte à évacuer le dihydrogène à réchauffer de l'échangeur thermique 3 lorsque le carburant utilisé est du dihydrogène. Dans un autre cas, il est possible de stopper le flux de carburant dans l'échangeur thermique 3 et de purger le reste du carburant présent dans l'échangeur thermique 3 de sorte à éviter la formation d'un environnement explosif.

En particulier, le fluide sous pression ayant une capacité à inerter du dihydrogène utilisé dans le système 2 de propulsion de l'invention présente une haute conductivité et est de préférence du diazote.

De préférence la couche de protection 37 comporte un circuit fermé contenant le fluide sous pression ayant une capacité à inerter du dihydrogène.

Bien que la présente description soit faite en relation avec un échangeur thermique 3 destiné à réchauffer du carburant avant son injection dans une chambre de combustion, il est envisageable, sans s'écarter du principe général de l'invention, d'utiliser un tel échangeur thermique 3 pour un autre fluide, tel que du diazote, de l'EGW ("Ethylene Glycol Water", pour solution d'éthylène-glycol et d'eau), de l'huile ou tout autre fluide tampon.

Dans une variante non illustrée de l'invention, l'échangeur thermique 3 pourrait comporter une pluralité de tronçons indépendants les uns des autres (et comportant donc chacun un orifice d'entrée 36a et de sortie 36b du carburant. De cette manière, lorsqu'une fuite ou un défaut est détecté sur l'un des tronçons, ce dernier peut être stoppé et isolé sans que les autres ne soient affectés. De cette manière, la sécurité et le fonctionnement du système 2 de propulsion sont améliorés.

## Revendications

1. Système (2) de propulsion pour aéronef (1) comportant :
- une chambre de combustion (21),
- un dispositif d'injection (22) de carburant configuré pour injecter un carburant dans ladite chambre de combustion (21), où ledit carburant est du dihydrogène,
- une turbine (23) configurée pour être entraînée en rotation par l'énergie motrice produite par ladite chambre de combustion (21),
- une tuyère d'échappement (24), disposée à l'arrière de ladite turbine (23), présentant un axe longitudinal (241) et dans laquelle circule un flux (Fx) de gaz d'échappement chaud issu de la combustion dudit carburant dans ladite chambre de combustion (21) à évacuer, où ledit flux (Fx) de gaz d'échappement s'écoule selon une direction (D1) et où ladite direction (D1) s'étend globalement parallèlement audit axe longitudinal (241) de ladite tuyère d'échappement (24) ;
- un échangeur thermique (3) disposé dans ladite tuyère d'échappement (24) et dans lequel circule ledit carburant avant d'alimenter ledit dispositif d'injection (22) et où ledit échangeur thermique (3) est traversé par ledit flux (Fx) de gaz d'échappement,
**caractérisé en ce que** ledit échangeur thermique (3) comporte :
- une paroi intérieure (31) globalement tubulaire et qui forme un conduit (310) à l'intérieur duquel s'écoule ledit flux (Fx) de gaz d'échappement ;
- une paroi extérieure (32) globalement tubulaire qui s'étend autour de ladite paroi intérieure (31) et qui forme avec ladite paroi intérieure (31) un espace d'écoulement (33) dans lequel s'écoule ledit carburant, ledit espace d'écoulement (33) comportant une couche de protection (37) contenant un fluide sous pression ayant une capacité à inerter du dihydrogène ;
où des axes longitudinaux (311, 321), respectivement desdites parois intérieure (31) et extérieure (32), s'étendent globalement parallèlement audit axe longitudinal (241) de ladite tuyère d'échappement (24).

2. Système (2) selon la revendication 1, **caractérisé en ce que** ladite paroi intérieure (31) est une paroi au moins partiellement ondulée.

3. Système (2) selon la revendication 1 ou 2, **caractérisé en ce que** ladite paroi intérieure (31) comporte une pluralité de premières ailettes (312) orientées vers l'axe longitudinal (311) de ladite paroi intérieure (31).

4. Système (2) selon l'une quelconque des revendications 1 à 3, **caractérisé en ce que** ladite paroi extérieure (32) présente une résistance à la pression supérieure ou égale à 50 bars.

5. Système (2) selon l'une quelconque des revendications 1 à 4, **caractérisé en ce que** ledit échangeur thermique (3) comporte une pluralité de parois intermédiaires (34) qui s'étendent entre ladite paroi intérieure (31) et ladite paroi extérieure (32), où lesdites parois intermédiaires (34) forment une pluralité de couches (35) radiales au sein dudit espace d'écoulement (33) qui sont en communication fluidique les unes avec les autres, et où ledit carburant circule dans lesdites couches (35) depuis une couche extérieure (35a) vers une couche intérieure (35b)

6. Système (2) selon la revendication 5, **caractérisé en ce que** ledit espace d'écoulement (33) comporte une pluralité de deuxièmes ailettes (331) reliant chacune au moins deux couches (35).

7. Système (2) selon la revendication 6, **caractérisé en ce que** lesdites deuxièmes ailettes (331) comportent des trous ou des plots.

8. Système (2) selon la revendication 5, **caractérisé en ce que** ladite couche de protection (37) est disposée entre ladite paroi intérieure (31) et ladite couche intérieure (35a).

9. Aéronef (1) comportant au moins un système (2) de propulsion selon l'une quelconque des revendications 1 à 8.
